# EUROPÄISCHE PATENTSCHRIFT

(11) **EP 0 560 040 B1**
(45) Veröffentlichungstag und Bekanntmachung des Hinweises auf die Patenterteilung: **15.01.1997**
(21) Anmeldenummer: 93101540.8
(22) Anmeldetag: 02.02.1993
(51) Int. Cl.: H04Q 11/04, H04M 11/06, H04M 19/08

(54) **Verfahren zur Aufrechterhaltung eines Notbetriebs bei digitalen Telekommunikations-Endeinrichtungen**
Method for maintaining emergency operation in digital telecommunication terminals
Méthode de maintien d'opération de secours dans des terminaux de télécommunication numérique

(30) Priorität: 10.03.1992 DE 4207562
(43) Veröffentlichungstag der Anmeldung: 15.09.1993
(73) Patentinhaber: ROBERT BOSCH GMBH, 70442 Stuttgart (DE)
(72) Erfinder: Reitz, Matthias, W-6090 Rüsselsheim 5 (DE); Trick, Ulrich, Dr., W-6232 Bad Soden 2 (DE)

(56) Entgegenhaltungen:
- DE-C- 4 038 749
- PATENT ABSTRACTS OF JAPAN vol. 14, no. 229 (E-0928) 15. Mai 1990 & JP-A-02 058 497 (CANON) 27. Februar 1990
- IEEE JOURNAL ON SELECTED AREAS IN COMMUNICATION, Bd.SAC-4, Nr.3, Mai 1986, NEW YORK US Seiten 349 - 354 U. DE JULIO ET AL. 'Layer 1 ISDN Recommendations'

## Beschreibung

Die Erfindung betrifft ein Verfahren zur Aufrechterhaltung des Notbetriebs bei digitalen Telekommunikations-Einrichtungen nach dem Oberbegriff des Patentanspruchs 1.

Eine nach einem solchen Verfahren arbeitende Einrichtung ist aus der DE 40 38 749 C1 bekannt.

In der DE-40 38 749 C1 ist ein Netzabschlußgerät für den ISDN-Basisanschluß angegeben. Es wird dort beschrieben, auf welche Weise ein Netzabschlußgerät beim Ausfall der örtlichen Stromversorgung oder beim Ausfall der Anschlußeinrichtung zumindest teilweise funktionsfähig bleibt. Beim Ausfall der örtlichen Stromversorgung wird mit Hilfe einer Koppeleinrichtung eine Standverbindung zwischen einer Endgeräte-Schnittstelle und der Anschlußleitung geschaltet. Dabei wird nur ein vorbestimmtes Endgerät über die Anschlußleitung mit Strom versorgt. Für eine derartige Standverbindung besteht ein Strombedarf, welcher von der leitungsseitigen Stromversorgung gedeckt werden muß. Deshalb ist bei der Beschreibung zu diesem Netzabschlußgerät auch angegeben, daß eine direkte Verbindung zwischen einer Endgeräte-Schnittstelle S1 und der Anschlußleitungs-Schnittstelle U außerhalb der Koppeleinrichtung eine Direktverbindung, beispielsweise über einen Relaiskontakt, hergestellt werden kann. Für eine derartige Direktverbindung wird kein zusätzlicher Strom benötigt. Wenn zum Zeitpunkt des Ausfalls der Stromversorgungseinrichtung bei einer Telekommunikations-Einrichtung, z.B. bei einem Netzabschlußgerät oder bei einer Fernsprech-Nebenstellenanlage Verbindungen bestehen, so gehen diese verloren, wenn keine besonderen Maßnahmen vorgesehen sind. Bei einer analog betriebenen Telekommunikations-Einrichtung kann eine zwischen der Anschlußleitung und demjenigen Endgerät, welches im Notbetriebsfall mit dieser Anschlußleitung verbunden wird, bestehende Verbindung aufrecht erhalten werden. Hierzu genügt es, die Direktverbindung unterbrechungsfrei herzustellen, so daß kein Auslösekriterium entsteht. Eine im Normalbetrieb zwischen einem notspeiseberechtigten Endgerät und der Anschlußleitung bestehende Verbindung kann bei einer digital betriebenen Telekommunikations-Einrichtung nur dann aufrecht erhalten werden, wenn an den dabei beteiligten Schnittstellen gleichartige Kanäle für diese Verbindung durchgeschaltet sind.

Die Aufgabe der Erfindung besteht darin, ein Verfahren anzugeben, womit die Vergabe von Kanälen beim Aufbauen von Verbindungen im Normalbetrieb so geregelt wird, daß beim Übergang in den Notbetrieb eine zwischen der Anschlußleitung und einem notspeiseberechtigten Endgerät bestehende Verbindung beim Schalten einer Direktverbindung mit größerer Wahrscheinlichkeit aufrecht erhalten werden kann.

Zur Lösung dieser Aufgabe ist eine Merkmalskombination vorgesehen, wie sie im Patentanspruch 1 angegeben ist.

Damit wird in vorteilhafter Weise erreicht, daß der Datenaustausch bei einer zwischen der Anschlußleitung und einem notspeiseberechtigten Endgerät bestehenden Verbindung auch dann mit großer Wahrscheinlichkeit fortgesetzt werden kann, wenn für den Notbetrieb eine Direktverbindung geschaltet wird.

Weiterbildungen der Erfindung ergeben sich aus den Unteransprüchen.

Ein Ausführungsbeispiel der Erfindung wird nachfolgend anhand einer Zeichnung näher erläutert.

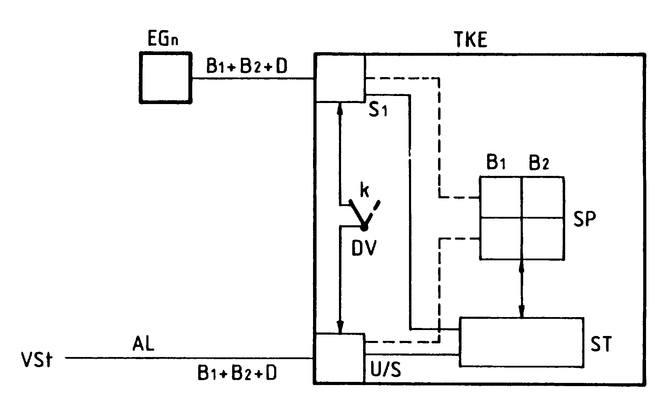

In der Zeichnung ist eine Telekommunikations-Einrichtung TKE dargestellt, welche über eine Anschlußleitung AL mit einer externen Vermittlungsstelle VSt verbunden ist. An die Telekommunikations-Einrichtung TKE sind mehrere Endgeräte angeschlossen, worunter sich auch ein Endgerät EGn befindet, welches zur Aufrechterhaltung eines Notbetriebs vorgesehen ist. Wenn der Notbetriebsfall eintritt, beispielsweise beim Ausfall der Stromversorgung für die Telekommunikations-Einrichtung TKE, wird eine Direktverbindung DV zwischen der Anschlußleitung AL und dem notspeisebe-rechtigten Endgerät EGn geschaltet. Damit ist dieses Endgerät EGn direkt mit der Anschlußleitung AL verbunden und zur externen Vermittlungsstelle VSt durchgeschaltet. Die Stromversorgung des Endgerätes EGn erfolgt dabei über die Anschlußleitung AL. Für das Schalten der Direktverbindung DV kann ein Kontakt k oder ein elektronisches Schaltmittel vorgesehen sein.

Das Endgerät EGn ist über eine Schnittstelle S1 mit der Telekommunikations-Einrichtung TKE verbunden. Für die Anschlußleitung AL ist je nach deren Ausführung eine genormte Schnittstelle U/S vorgesehen Die Telekommunikations-Einrichtung TKE, wobei es sich beispielsweise um ein digitales Netzabschlußgerät mit Vermittlungsfunktion oder um eine digitale Nebenstellenanlage handeln kann, verfügt über eine Steuereinrichtung ST, die beim Aufbauen von Verbindungen innerhalb der Telekommunikations-Einrichtung TKE u.a. für die Vergabe der Kanäle zuständig ist. Es sei angenommen, daß für eine Telekommunikationsverbindung, an der ein Endgerät, z.B. EGn beteiligt ist, zwei Nutzdatenkanäle B1 und B2 sowie ein Signalisierungskanal D zur Verfügung stehen. Um bei einer zwischen einem notspeiseberechtigten Endgerät EGn und der Anschlußleitung AL bestehenden Verbindung optimale Voraussetzungen zu schaffen für die Aufrechterhaltung einer solchen Verbindung beim Übergang in den Notbetrieb, ist ein Speicher SP vorgesehen. In diesem Speicher SP wird den an einer solchen Verbindung beteiligten Schnittstellen S1 und U/S zugeordnet eingetragen, welche Kanäle B1, bzw. B2 dort jeweils belegt sind.

Im folgenden wird beschrieben, auf welche Weise die Kanalvergabe geregelt wird, wenn Internverbindungen oder Externverbindungen aufgebaut werden sollen.
Wenn von der Schnittstelle S1, woran neben dem notspeiseberechtigten Endgerät EGn auch andere Endgeräte angeschlossen sein können, eine Verbindung angefordert wird, so wird der Belegungszustand der Schnittstelle U/S, welche der Anschlußleitung AL zugeordnet ist, berücksichtigt. Zu diesem Zweck wird durch Abfragen des Speichers Sp festgestellt, welcher Nutzdatenkanal B1 oder B2 dort frei ist, weil diese Schnittstelle U/S an einer möglichen Externverbindung beteiligt ist. Wenn die Steuereinrichtung ST bei der Abfrage des Speichers SP feststellt, daß an der Schnittstelle U/S der Anschlußleitung AL beide Kanäle B1 und B2 frei sind, so wird für die Verbindung der Kanal B2 belegt. Dies geschieht unter der Annahme, daß von der externen Vermittlungsstelle VSt für eine Externverbindung vorzugsweise zuerst der andere Kanal B1 belegt wird. Dieser Kanal B1 wäre dann an der Schnittstelle S1 frei, so daß eine Externverbindung zum notspeiseberechtigten Endgerät EGn durchschaltbar wäre, welche dann beim Übergang in einen Notbetrieb aufrecht erhalten werden könnte.

Wenn beim Aufbauen einer Verbindung an der schnittstelle S1 festgestellt wird, daß an der Schnittstelle U/S nur einer der beiden Kanäle B1 oder B2 frei ist, so wird der jeweils gleiche Kanal B1 oder B2 auch in der Schnittstelle S1 in Anspruch genommen. Hierbei wird davon ausgegangen, daß der an der Schnittstelle U/S für die Anschlußleitung AL noch freie Kanal für eine zum notspeiseberechtigten Endgerät EGn führende Externverbindung belegt werden könnte.

Bei einer von der externen Vermittlungsstelle VSt über die Anschlußleitung AL ankommenden Verbindung, welche innerhalb der Kommunikations-Einrichtung TKE zu der Schnittstelle S1 durchgeschaltet werden soll, wird an dieser Schnittstelle S1 derjenige Kanal B1 für diese Verbindung belegt, welcher von der Schnittstelle U/S der Anschlußleitung AL her vorgegeben wurde. Dabei könnte eine Verbindung zum notspeiseberechtigten Endgerät EGn entstehen, welche im Notbetriebsfall aufrecht zu erhalten wäre. In gleicher Weise wird bei einer abgehenden Externverbindung an der Schnittstelle S1, wo das notspeiseberechtigte Endgerät EGn angeschlossen ist, immer derjenige Kanal B1 oder B2 vergeben, welcher an der Schnittstelle U/S der Anschlußleitung AL frei ist. Falls an dieser Schnittstelle U/S noch beide Kanäle B1 und B2 frei sind, so wird an beiden Schnittstellen S1 und U/S der Kanal B2 belegt und dies der externen Vermittlungsstelle VSt für die B-Kanal-Vergabe vorgeschlagen oder vorgeschrieben. Damit bleibt in diesem Fall der andere Kanal B1 für eine weitere Externverbindung frei, welche auch zu dem notspeiseberechtigten Endgerät EGn führen könnte, wenn dieses frei ist.

Mit den vorbeschriebenen Maßnahmen wird erreicht, daß die Kanalvergabe an den Schnittstellen S1 und U/S so vorgenommen wird, daß im Normalbetrieb mit großer Wahrscheinlichkeit Verbindungen mit den gleichen B-Kanälen zu dem notspeiseberechtigten Endgerät EGn aufgebaut werden können. Diese Verbindungen können dann aufrecht erhalten werden, wenn der Notbetriebsfall eintritt und eine Direktverbindung DV über das Schaltmittel k hergestellt wird. Die Wahrscheinlichkeit, daß die zwischen der Anschlußleitung AL und dem notspeiseberechtigten Endgerät EGn bestehende Verbindung aufrecht erhalten werden kann, wird durch diesen Modus bei der Vergabe der Kanäle B1 und B2 an den Schnittstellen S1 und U/S wesentlich erhöht.

## Patentansprüche

1. Verfahren zur Aufrechterhaltung eines Notbetriebs bei einer digitalen Telekommunikations-Einrichtung (TKE) zum Vermitteln mindestens zweier digitaler Endgeräte und einer mit einer Anschlußleitung (AL) verbundenen Schnittstelle (U/S), wobei im Normalbetrieb zwei gleichartige Nutzdatenkanäle (B1, B2) zur Verfügung stehen und die digitale Telekomunikations-Einrichtung (TKE) einschließlich angeschlossener Endgeräte (EGn) im Normalbetrieb von einer örtlichen Stromversorgung gespeist werden und wobei im Notbetrieb, z.B. beim Ausfall der Stromversorgung, ein notspeiseberechtigtes digitales Endgerät (EGn) über eine Direktverbindung (DV) mit der Anschlußleitung (AL) verbunden und über diese gespeist wird,
dadurch gekennzeichnet, daß die Vergabe der Nutzdatenkanäle (B1, B2) im Normalbetrieb an Verbindungen für Extern- und Internverkehr zwischen Schnittstellen (S1, U/S) eines notspeisesberechtigten Endgerätes (EGn), des oder der andere(n) Endgerät(e) und der Anschlußleitung (AL) in Abhängigkeit der Nutzdatenkanalbelegung auf der Anschlußleitung (AL) folgendermaßen vorgenommen wird:
- bei der Vergabe eines Nutzdatenkanals (B1, B2) an einer Schnittstelle (S1), an der ein notspeiseberechtigtes Endgerät (EGn) angeschlossen ist, wird die aktuelle Belegungssituation an der Schnittstelle (U/S) der Anschlußleitung (AL) abgefragt und ausgewertet,
- für die Vergabe eines Nutzdatenkanals (B1, B2) an der Schnittstelle (U/S) der Anschlußleitung (AL) wird die aktuelle Belegungssituation an der Schnittstelle (S1), an der das notspeiseberechtigte Endgerät (EGn) angeschlossen ist, abgefragt und ausgewertet,
- es wird, wenn nur einer der beiden Nutzdatenkanäle (B1, B2) frei ist, jeweils ein gleichartiger Nutzdatenkanal (B1, B2) an den Schnittstellen (S1, U/S) in Abhängigkeit von der Belegungsart für Extern- oder Internverkehr belegt oder freigehalten, über den dann beim Übergang in den Notbetrieb eine zwischen dem notspeiseberechtigten Endgerät (EGn) und der Anschlußleitung (AL) bestehende Verbindung über die Direktverbindung (DV) aufrechterhalten wird.

2. Verfahren nach Anspruch 1, dadurch gekennzeichnet, daß in einer Steuereinrichtung (ST) der Telekommunikations-Einrichtung (TKE) ein Speicher (SP) vorgesehen ist, in dem abgespeichert ist, welche Kanäle bei den Schnittstellen (S1, U/S) belegt sind.

3. Verfahren nach Anspruch 1, dadurch gekennzeichnet, daß für eine Internverbindung derjenige Nutzdatenkanal (B2) genutzt wird, der von einer über die Anschlußleitung (AL) erreichbaren Vermittlungsstelle (VSt) erst mit einer nachrangigen Priorität belegt wird.

4. Verfahren nach Anspruch 1, dadurch gekennzeichnet, daß bei einer abgehenden Belegung der Anschlußleitung (AL) für eine Externverbindung zur Vermittlungsstelle (VSt) eine Mitteilung gesendet wird, womit eine vorzuziehende Kanalvergabe (B2) vorgeschlagen oder vorgeschrieben wird.

## Claims

1. Method for maintaining emergency operation in a digital telecommunication facility (TKE) for switching at least two digital terminals and an interface (U/S) connected to a subscriber line (AL), two identical user-data channels (B1, B2) being available in normal operation and the digital telecommunication facility (TKE), including connected terminals (EGn), being fed by a local power supply in normal operation, and a digital terminal (EGn) authorized for emergency feeding being connected via a direct connection (DV) to the subscriber line (AL) and fed via the latter in emergency operation, for example if the power supply fails, characterized in that the assignment of the user-data channels (B1, B2) in normal operation to connections for external and internal traffic between interfaces (S1, U/S) of a terminal (EGn) authorized for emergency feeding, of the other terminal(s) and of the subscriber line (AL) is performed in dependence on the user-data channel occupancy on the subscriber line (AL) in the following way:
- in the assignment of a user-data channel (B1, B2) at an interface (S1) at which a terminal (EGn) authorized for emergency feeding is connected, the current occupancy situation at the interface (U/S) of the subscriber line (AL) is enquired and evaluated,
- for the assignment of a user-data chann 1 (B1, B2) at the interface (U/S) of the subscriber line (AL), the current occupancy situation at the interface (S1) at which the terminal (EGn) authorized for emergency feeding is connected is enquired and evaluated,
- if only one of the two user-data channels (B1, B2) is free, in each case an identical user-data channel (B1, B2) at the interfaces (S1, U/S) is occupied or kept clear for external or internal traffic, depending on the type of occupancy, over which channel a connection existing between the terminal (EGn) authorized for emergency feeding and the subscriber line (AL) is then maintained via the direct connection (DV) during the transition into emergency operation.

2. Method according to Claim 1, characterized in that in a controller (ST) of the telecommunication facility (TKE) there is provided a memory (SP) in which there is stored which channels at the interfaces (S1, U/S) are occupied.

3. Method according to Claim 1, characterized in that, for an internal connection, that user-data channel (B2) which is occupied first with a lower priority by an exchange (VSt) which can be reached via the subscriber line (AL) is used.

4. Method according to Claim 1, characterized in that, in the case of an outgoing occupancy of the subscriber line (AL) for an external connection to the exchange (VSt), a message with which a preferable channel assignment (B2) is proposed or prescribed is sent.

## Revendications

1. Procédé pour maintenir un fonctionnement de secours dans une installation de télécommunication numérique (TKE) pour relier au moins deux terminaux numériques et une interface (U/S) reliée à la ligne de branchement (AL), selon lequel, en mode normal, on dispose de deux canaux de données utiles de même type (B1, B2) et l'installation numérique de télécommunication (TKE) y compris les terminaux branchés (EGn) sont alimentés en mode normal par une alimentation électrique locale, et qui, en fonctionnement de secours, par exemple en cas de coupure de l'alimentation, relie un terminal numérique (EGn) autorisé au fonctionnement de secours, à la ligne de branchement (AL) par une liaison directe (DV) pour en assurer l'alimentation,
caractérisé en ce que
l'attribution des canaux de données utiles (B1, B2) en fonctionnement normal aux liaisons pour les communications externes et internes entre les interfaces (S1, U/S) d'un terminal (EGn) autorisé au fonctionnement de secours, du ou des autres terminaux et de la ligne de branchement (AL) en fonction de l'occupation du canal de données utiles sur la ligne de branchement (AL) se fait de la manière suivante :
- à l'attribution d'un canal de données utiles (B1, B2) à une interface (S1) à laquelle est relié le terminal (EGn) autorisé à recevoir l'alimentation de secours, on interroge la situation d'occupation instantanée à l'interface (U/S) de la ligne de branchement (AL) et on l'exploite,
- pour l'attribution d'un canal de données utiles (B1, B2) à l'interface (U/S) de la ligne de branchement (AL) on interroge la situation d'occupation instantanée de l'interface (S1) à laquelle est relié le terminal (EGn) autorisé à recevoir l'alimentation de secours et on l'exploite,
- si seulement l'un des deux canaux de données utiles (B1, B2) est libre, on occupe chaque fois un canal de données utiles de même type (B1, B2) aux interfaces (S1, U/S) en fonction du type d'occupation pour la communication externe ou interne ou on maintient libre, et au passage au mode de fonctionnement de secours, on maintient une liaison existante entre le terminal (EGn) autorisé à recevoir l'alimentation de secours et la ligne de branchement (AL) par la liaison directe (DV).

2. Procédé selon la revendication 1,
caractérisé en ce que
une installation de commande (ST) de l'installation de télécommunication (TKE) comporte une mémoire (SP) qui enregistre les canaux occupés par les interfaces (S1, U/S).

3. Procédé selon la revendication 1,
caractérisé en ce que
pour une liaison interne, on utilise le canal de données utiles (B2) qui est occupé d'abord par une priorité de rang inférieur par le point de transmission (VSt) que l'on peut atteindre par la ligne de branchement (AL).

4. Procédé selon la revendication 1,
caractérisé en ce que
à l'émission d'une occupation de la ligne de transmission (AL) pour une liaison externe vers le point de transmission (VSt), on émet une communication qui propose ou prescrit une attribution préférentielle de canal (B2).
